# EUROPEAN PATENT APPLICATION

(11) **EP 4 769 388 A1**
(43) Date of publication of application: **01.07.2026**
(21) Application number: 24906014.6
(22) Date of filing: 27.11.2024
(51) Int. Cl.: G10L 15/22, G08B 21/24, G08B 3/10

(54) **OUT-OF-VEHICLE SPEECH INTERACTION METHOD, OUT-OF-VEHICLE SPEECH INTERACTION APPARATUS, AND VEHICLE**

(30) Priority: 22.12.2023 CN 202311786097
(71) Applicant: Geely Automotive Research Institute (Ningbo) Co., Ltd., Hangzhou Bay New District Ningbo, Zhejiang 315336 (CN)
(72) Inventor: SUN, Zhiqiang, Ningbo, Zhejiang 315336 (CN); YAN, Yonggui, Ningbo, Zhejiang 315336 (CN); ZHANG, Jian, Ningbo, Zhejiang 315336 (CN); HAO, Jie, Ningbo, Zhejiang 315336 (CN)
(74) Representative: Michalski Hüttermann & Partner mbB
(86) International application number: PCT/CN2024/134807
(87) International publication number: WO 2025/130529

(57) **Abstract**

An out-of-vehicle speech interaction method, an out-of-vehicle speech interaction apparatus, and a vehicle. The out-of-vehicle speech interaction method comprises: when a vehicle is in a sentry mode and changes from a standby state to a non-standby state, broadcasting a speech prompt according to a preset rule (S10); acquiring a speech input from a user outside the vehicle (S20); and executing a response operation on the basis of the speech input from the user outside the vehicle (S30). The capability of a conventional sentry mode is reused, and the conventional sentry mode is combined with an out-of-vehicle speech interaction capability, thereby realizing an out-of-vehicle speech interaction experience triggered by a state change of the sentry mode.

## Description

### TECHNICAL FIELD

Embodiments of the present disclosure relate to, but are not limited to, a technical field of human-machine interaction, and in particular, to an out-of-vehicle speech interaction method, an out-of-vehicle speech interaction apparatus, and a vehicle.

### BACKGROUND

With the development of vehicle intelligent technologies, human-machine interaction functions of vehicles are more intelligent, and speech interaction is widely applied to vehicles as a common human-machine interaction manner. Traditional vehicle speech interaction functions are mainly concentrated in an in-vehicle human-machine interaction scenario, and ignore an out-of-vehicle human-machine interaction scenario in which an out-of-vehicle user interacts with a vehicle, which results in an insufficient intelligence degree of out-of-vehicle human-machine interaction functions, and makes it difficult to meet human-machine interaction requirements.

### SUMMARY

The following is an overview of the subject matter described in detail herein. The overview is not intended to limit the protection scope of the claims.

An embodiment of the present disclosure discloses an out-of-vehicle speech interaction method, including:
broadcasting, when a vehicle is in a sentry mode and changes from a standby state to a non-standby state, a speech prompt according to a preset rule;
obtaining a speech input of an out-of-vehicle user; and
performing a response operation according to the speech input of the out-of-vehicle user.

Optionally, performing the response operation according to the speech input of the out-of-vehicle user, includes:
identifying a user intention according to the speech input of the out-of-vehicle user;
obtaining, when a target operation corresponding to the user intention is a communication-type operation, the number of times of performing the target operation in a preset period, where the communication-type operation includes at least one of: a short-message leaving operation, a speech call operation, or a speech message leaving operation; where the preset period includes a current state switching period or a current engine-off period; where the current state switching period indicates a period in which the vehicle changes from the standby state to the non-standby state and recovers to the standby state;
determining whether the number of times of performing the target operation in the preset period is less than a first preset number;
in a case that the number of times of performing the target operation in the preset period is less than the first preset number, performing the target operation; and
in a case that the number of times of performing the target operation in the preset period is not less than the first preset number, outputting a refusal-to-perform prompt.

Optionally, the out-of-vehicle speech interaction method further includes:
when the sentry state changes from the standby state to the non-standby state, obtaining a statistical parameter in a current state switching period, where the current state switching period indicates a period in which the vehicle changes from the standby state to the non-standby state and recovers to the standby state; and
when the statistical parameter meets a preset condition, disabling an out-of-vehicle speech interaction function in the current state switching period, where the preset condition includes at least one of: a duration of the current state switching period is greater than a preset duration, or the number of times of interaction in the current state switching period is greater than a second preset number.

Optionally, the out-of-vehicle speech interaction method further includes:
obtaining the number of times of out-of-vehicle speech interaction in a current engine-off period; and
when the number of times of out-of-vehicle speech interaction is greater than a third preset number, disabling an out-of-vehicle speech interaction function in the current engine-off period.

Optionally, broadcasting the speech prompt according to the preset rule further includes:
extracting the speech prompt from a preset speech prompt set for broadcasting, where the non-standby state includes an alert state and an alarm state, and the preset speech prompt set is a speech prompt set corresponding to a current state of the vehicle, a speech prompt set corresponding to instructions pre-stored by a vehicle owner, or a speech prompt set corresponding to a current scenario in which the vehicle is located.

Optionally, performing the response operation according to the speech input of the out-of-vehicle user, includes:
identifying a user intention according to the speech input of the out-of-vehicle user;
determining, when a target operation corresponding to the user intention is a communication-type operation, a target object according to the speech input of the out-of-vehicle user, where the communication-type operation includes at least one of: a short-message leaving operation, a speech call operation, or a speech message leaving operation; where the target object includes a vehicle owner terminal or a vehicle enterprise terminal; and
performing the target operation corresponding to the user intention on the target object.

Optionally, performing the response operation according to the speech input of the out-of-vehicle user, includes:
identifying a user intention according to the speech input of the out-of-vehicle user;
determining whether a target operation corresponding to the user intention belongs to a preset prohibition operation;
in a case that the target operation corresponding to the user intention belongs to the preset prohibition operation, prohibiting performing the target operation; and
in a case that the target operation corresponding to the user intention does not belong to the preset prohibition operation, performing the target operation.

Optionally, broadcasting the speech prompt according to the preset rule includes:
obtaining an image of an environment where the vehicle is located;
identifying, according to the image, a type of a living entity that triggers the vehicle to change from the standby state to the non-standby state, where the type of the living entity includes at least two of: a child, an animal, or an adult; and
outputting a speech prompt corresponding to the type of the living entity.

An embodiment of the present disclosure further discloses an out-of-vehicle speech interaction apparatus, including: a computer-readable storage medium storing a computer program; and one or more processors, where when the computer program is read and run by the one or more processors, the above out-of-vehicle speech interaction method is implemented.

An embodiment of the present disclosure further discloses a vehicle, including the above out-of-vehicle speech interaction apparatus.

Compared with the existing technology, the out-of-vehicle speech interaction method, the out-of-vehicle speech interaction apparatus, and the vehicle of the embodiments of the present disclosure have at least the following beneficial effects.

When the vehicle is in the sentry mode and changes from the standby state to the non-standby state, the vehicle broadcasts the speech prompt according to the preset rule, obtains the speech input of the out-of-vehicle user, and performs the response operation according to the speech input of the out-of-vehicle user. That is, the traditional sentry mode is combined with the out-of-vehicle speech interaction capability, the traditional sentry mode capability is reused, the change of the vehicle working condition state (reflected as the sentry state) identified in the sentry mode is used as a condition of triggering the out-of-vehicle speech interaction, the out-of-vehicle user is prompted through broadcasting the speech prompt, the speech input of the out-of-vehicle user is obtained, and the response operation is performed according to the speech input of the out-of-vehicle user, which realizes the speech interaction between the vehicle and the out-of-vehicle user, then realizes the experience of the out-of-vehicle speech interaction triggered by the state change of the sentry mode, and improves the intelligent degree of the out-of-vehicle speech interaction. In addition, the traditional sentry mode capability is reused, the functions of monitoring and image identification do not need to be repeatedly developed, and the product experience is improved while the cost is not increased.

Other aspects may be apparent upon reading and understanding the detailed description.

### BRIEF DESCRIPTION OF DRAWINGS

FIG. 1 is an embodiment schematic flowchart of an out-of-vehicle speech interaction method of an embodiment of the present disclosure.
FIG. 2 is another embodiment schematic flowchart of an out-of-vehicle speech interaction method of an embodiment of the present disclosure.
FIG. 3 is an embodiment schematic diagram of an implementation architecture of an out-of-vehicle speech interaction method of an embodiment of the present disclosure.
FIG. 4 is still another embodiment schematic flowchart of an out-of-vehicle speech interaction method of an embodiment of the present disclosure.

### DETAILED DESCRIPTION

In order to make the above objects, features, and advantages of the embodiments of the present disclosure more comprehensible, specific embodiments of the present disclosure will be described in detail below with reference to the accompanying drawings.

It should be understood that the accompanying drawings and embodiments of the embodiments of the present disclosure are merely used for exemplary purposes, and are not intended to limit the protection scope of the embodiments of the present disclosure. The term "including" and variations thereof used in the embodiments of the present disclosure are openended "including", i.e., "including but not limited to"; the term "an embodiment" means "at least one embodiment"; the term "another embodiment" means "at least one additional embodiment"; the term "some embodiments" means "at least some embodiments"; and the term "optionally" means "optional embodiments". Related definitions of other terms will be given in the following description.

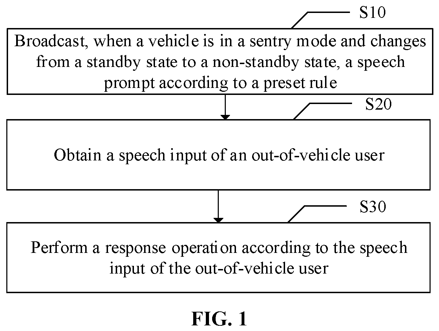

As shown in FIG. 1, in an embodiment, the out-of-vehicle speech interaction method of an embodiment of the present disclosure includes following steps S 10-S30.

At step S10, when a vehicle is in a sentry mode and changes from a standby state to a non-standby state, a speech prompt is broadcast according to a preset rule.

The sentry mode is typically enabled after the vehicle has stopped and been engine-off. In some implementations, the vehicle enters the sentry mode when a main driving seat of the vehicle has no person, the vehicle is in the parking, the vehicle is in the engine-off state, and a center control lock is locked. The vehicle in the sentry mode may use functions such as camera monitoring, image identification, and/or vibration detection to detect an abnormal condition of an environment in which the vehicle is located and an abnormal collision suffered by the vehicle. In the sentry mode, there are multiple sentry states that change according to detection results. In some implementations, the sentry states include a standby state and a non-standby state. The non-standby state includes an alert state and an alarm state. A condition of triggering the alert state of the sentry mode includes that a living entity stays in a preset distance range (for example, 1 meter) around the vehicle for a duration. A condition of triggering the alarm state of the sentry mode includes the collision or vibration of the vehicle. When the sentry mode is enabled, the vehicle enters the standby state. If the condition of triggering the alert state is detected, for example, a person rests against the vehicle, the sentry mode is switched to the alert state. If the condition of triggering the alarm state is detected, for example, a person hits the vehicle, and the sentry mode is switched to the alarm state.

When the vehicle changes from the standby state to the non-standby state, the speech prompt is broadcast according to the preset rule. The speech prompt may be a guiding term, which is used to guide the out-of-vehicle user to perform speech interaction with the vehicle. For example, the speech prompt may be "you are too close to me, and do you want to know me?" and you can say "introduce yourself". Therefore, through broadcasting the guiding term, the out-of-vehicle user cannot feel abrupt or uncomfortable while playing a prompt role, and the function of the product can be displayed.

In some implementations, when the vehicle changes from the standby state to the non-standby state, TTS (text-to-speech) speech broadcast is performed, to output a preset speech prompt.

In some embodiments, broadcasting the speech prompt according to the preset rule includes: randomly extracting the speech prompt from a preset speech prompt library for broadcasting. The preset speech prompt library stores a plurality of speech prompts. For example, the speech prompt may be "you are too close to me, and please be careful" or "you are too close to me, and do you want to know me?", and you can say "introduce yourself". The speech prompt may be "you are too close to me, and do you want to move your car?", and you can say "I want to move the car". The speech prompt may be "you are too close to me, and would you like to leave a message for the vehicle owner?", and you can say "I want to leave a message". The speech prompt may be "you are too close to me, and would you like to talk to the vehicle owner?" and you can say "I want to make a phone call". The speech prompt may be "you are too close to me, and is there any danger around you?" and you can say "please help me call the police." The speech prompts are randomly extracted from the database storing the plurality of speech prompts for broadcasting, so that the broadcast speech prompts are not repeated, and the user experience is improved.

In an embodiment, broadcasting the speech prompt according to the preset rule includes: extracting the speech prompt from a preset speech prompt set for broadcasting, where the non-standby state includes an alert state and an alarm state, and the preset speech prompt set is a speech prompt set corresponding to a current state of the vehicle, a speech prompt set corresponding to instructions pre-stored by the vehicle owner, or a speech prompt set corresponding to a current scenario in which the vehicle is located.

In some embodiments, broadcasting the speech prompt according to the preset rule includes: randomly extracting a speech prompt from a speech prompt set corresponding to a current state of the vehicle for broadcasting, where the current state of the vehicle includes an alert state and an alarm state, and the alert state and the alarm state respectively correspond to respective speech prompt sets. Due to different reasons of triggering the alert state and the alarm state, threat levels of the alert state and the alarm state to the vehicle are different, different speech prompt sets are preset respectively, and different speech prompts are performed, which may adapt to the current state of the vehicle, and improve the intelligence of the speech prompt. For example, mild and humor speech prompts are used for the alert state, and severe speech prompts are used for the alarm state. The speech prompt set associated with the alert state may include: "you are too close to me, and please be careful" or "you are too close to me, and do you want to know me?", and you can say "introduce yourself". The speech prompt may be "you are too close to me, and do you want to move your car?" and you can say "I want to move the car". The speech prompt set associated with the alarm state may include: "Don't hit me, I'm in pain" or "Please don't hit me, I'm recording a video".

In some implementations, broadcasting the speech prompt according to the preset rule includes: determining whether there is an instruction pre-stored by a vehicle owner, where the instruction pre-stored by the vehicle owner includes but is not limited to a vehicle moving prompt instruction, a camera shooting prompt instruction, or a chat prompt instruction; and if there is an instruction pre-stored by the vehicle owner, a speech prompt corresponding to the instruction pre-stored by the vehicle owner is obtained and output. For example, if the parking position of the vehicle of the vehicle owner blocks a vehicle of another person, it can be predicted that there may be highly likely a vehicle moving requirement in several hours in the future, the vehicle owner may pre-store a vehicle moving prompt instruction, and when the sentry state changes from the standby state to the non-standby state, a vehicle moving prompt speech corresponding to the vehicle moving prompt instruction is broadcast, for example, "you are too close to me, and do you want to move your car", and you can say "I want to move the car". For example, if the parking position of the vehicle of the vehicle owner is abominable, there is a high risk of damage to the vehicle, the vehicle owner may pre-store a camera shooting prompt instruction, and when the sentry state changes from the standby state to the non-standby state, a camera shooting prompt speech corresponding to the camera shooting prompt instructions is broadcast, for example, "you are too close to me, I'm recording the image, do you have anything to say to me?" For example, the vehicle owner wants to display his/her own vehicle and may pre-store a chat prompt instruction, and when the sentry state changes from the standby state to the non-standby state, a chat prompt speech corresponding to the chat prompt instruction is broadcast, for example, "you are too close to me, and do you want to know me?", and you can say "introduce yourself". Therefore, when the vehicle changes from the standby state to the non-standby state, the speech prompt broadcast by the vehicle may better conform to the environment where the vehicle is located, and better conform to the intention of the vehicle owner, which improves the use experience of the vehicle owner.

If the instruction of the vehicle owner is not pre-stored, a speech prompt is randomly extracted from the preset speech prompt library for broadcasting, or a speech prompt is randomly extracted from the speech prompt set corresponding to the current state of the vehicle for broadcasting. The related explanation is described above, and will be not repeated herein.

In some implementations, broadcasting the speech prompt according to the preset rule includes: obtaining a current scenario in which the vehicle is located, selecting a speech prompt from a speech prompt set corresponding to the current scenario in which the vehicle is located, and outputting the speech prompt. A plurality of scenarios may be preset, and a corresponding speech prompt set is preset for each scenario, where the types of scenarios include, but are not limited to, a home, a company, a market, a bustling city, etc. In an implementation scenario, the current scenario in which the vehicle is located is determined by obtaining a location of the vehicle. For example, if the vehicle is located at the home of the vehicle owner, the current scenario in which the vehicle is located is a home scenario, and if the vehicle is located at the market, the current scenario in which the vehicle is located is a market scenario. In another implementation scenario, the current scenario in which the vehicle is located is set by the vehicle owner, for example, the vehicle owner may set the current scenario in which the vehicle is located on a dedicated APP (application).

If the obtaining of the current scenario in which the vehicle is located fails, a speech prompt is randomly extracted from the preset speech prompt library for broadcasting, or a speech prompt is randomly extracted from the speech prompt set associated with the current sentry state for broadcasting. The related explanation is described above, and will be not repeated herein.

In the above implementation, the pre-stored speech prompt may be a default speech prompt set at the factory, or may be a speech recorded by the vehicle owner; or, a text may be set by the vehicle owner, and then the TTS broadcast is performed.

The sentry state (alarm status, alert status), speech prompt content, communication content, etc., of the vehicle are recorded in a log, for the vehicle owner to view and understand the condition of the vehicle.

In some implementations, when the vehicle changes from the standby state to the non-standby state, a front sound effect is broadcast first, and then a speech prompt is broadcast according to a preset rule. The front sound effect is a prompt sound effect, and is used to prompt that the vehicle is to broadcast the speech prompt, for example, "ding-dong" and "ding", so that discomfort caused by directly abruptly broadcasting the speech prompt to an out-of-vehicle user (including a pedestrian) may be avoided.

At step S20, a speech input of an out-of-vehicle user is obtained.

When the vehicle changes from the standby state to the non-standby state, the speech prompt is broadcast according to a preset rule. After broadcasting the speech prompt according to the preset rule, when broadcasting the speech prompt according to the preset rule, or before broadcasting the speech prompt according to the preset rule, the speech input of the out-of-vehicle user is obtained.

In some embodiments, when the sentry state changes from the standby state to the non-standby state, a TTS broadcast speech prompt is performed according to the preset rule, to guide the out-of-vehicle user to talk to the vehicle, and at the same time, to wake up the out-of-vehicle speech function to obtain the speech input of the out-of-vehicle user in real time.

At step S30, a response operation is performed according to the speech input of the out-of-vehicle user.

After performing noise reduction on the speech input of the out-of-vehicle user, speech identification is performed, and the user intention of the out-of-vehicle user is determined according to the speech identification result. The user intention may be determined in a keyword and/or semantic understanding manner, a target operation corresponding to the user intention is then determined, and a response operation is performed. The response operation includes, but is not limited to, a human-machine speech chat operation, an information query operation, and an information feedback operation (for example, weather query, constellation query, and vehicle self-introduction, etc.), a short-message sending operation, or a speech call initiating operation.

According to the embodiment of the present disclosure, when the vehicle is in the sentry mode and changes from the standby state to the non-standby state, the vehicle broadcasts the speech prompt according to the preset rule, obtains the speech input of the out-of-vehicle user, and performs the response operation according to the speech input of the out-of-vehicle user. That is, the traditional sentry mode is combined with the out-of-vehicle speech interaction capability, the traditional sentry mode capability is reused, the change of the vehicle working condition state (reflected as the sentry state) identified in the sentry mode is used as a condition of triggering the out-of-vehicle speech interaction, the out-of-vehicle user is prompted through broadcasting the speech prompt, the speech input of the out-of-vehicle user is obtained, and the response operation is performed according to the speech input of the out-of-vehicle user, which realizes the speech interaction between the vehicle and the out-of-vehicle user, and then realizes the experience of the out-of-vehicle speech interaction triggered by the state change of the sentry mode. In addition, the traditional sentry mode capability is reused, the functions of monitoring and image identification do not need to be repeatedly developed, and the product experience is improved while the cost is not increased.

In addition, according to the embodiment of the present disclosure, the out-of-vehicle user is guided to directly communicate with the vehicle and the vehicle user through the out-of-vehicle speech prompt, which may alleviate the emotion of the out-of-vehicle user and provide a more humane and advanced experience. In addition, through the out-of-vehicle intelligent speech interaction capability, the curiosity of the out-of-vehicle user on the vehicle can be met, and the brand image and the reputation of the vehicle may be improved.

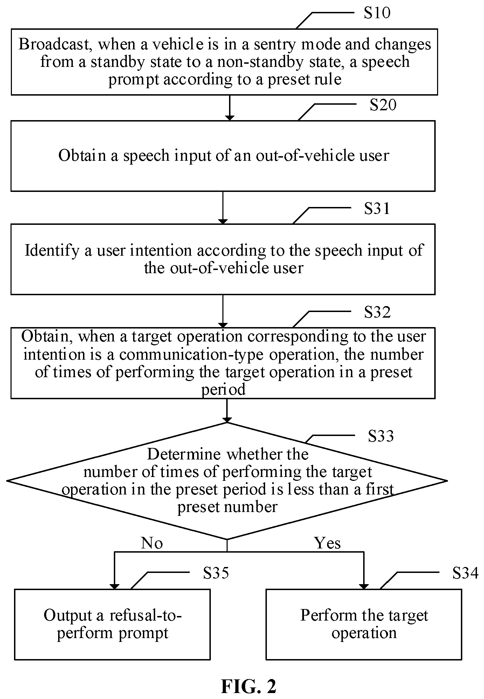

In some embodiments, as shown in FIG. 2, the step S30 includes following steps S31-S35.

At step S31, a user intention is identified according to the speech input of the out-of-vehicle user.

After performing noise reduction on the speech input of the out-of-vehicle user, the speech identification is performed to identify a keyword representing the user intention, and a corresponding target operation is determined by matching the identified keyword with a preset operation mapping table.

At step S32, when a target operation corresponding to the user intention is a communication-type operation, the number of times of performing the target operation in a preset period is obtained, where the communication-type operation includes at least one of: a short-message leaving operation, a speech call operation, or a speech message leaving operation; where the preset period includes a current state switching period or a current engine-off period; where the current state switching period indicates a period in which the vehicle changes from the standby state to the non-standby state and recovers to the standby state.

In order to avoid communication-type operations such as short-messages, calls, etc., from harassing the vehicle owner, anti-play measures are set for the operations, the number of times of performing the target operation in the preset period are obtained, and a large number of short-messages or calls are prevented from being sent to the vehicle owner terminal by limiting the number of times of performing the target operation in the preset period.

In the current state switching period, the sentry state switching is caused every time the sentry mode is triggered, the vehicle switches from the standby state to the non-standby state (such as the alert state or the alarm state), and after the triggering item disappears for a period of time, the vehicle recovers from the non-standby state to the standby state.

The current engine-off period indicates a period in which the vehicle changes currently from stopping and engine-off to re-ignition and turning-on.

At step S33, it is determined whether the number of times of performing the target operation in the preset period is less than a first preset number (or a first preset number of times).

At step S34, in a case that the number of times of performing the target operation in the preset period is less than the first preset number, the target operation is performed.

At step S35, in a case that the number of times of performing the target operation in the preset period is not less than the first preset number, a refusal-to-perform prompt is output.

By limiting the number of times of performing the communication-type operation in a state switching period or an engine-off period, too many short-messages, calls, speech leave-messages, etc., may be avoided from troubling the vehicle owner, thereby ensuring the product experience of the vehicle owner.

In some embodiments, the out-of-vehicle speech interaction method of the present disclosure further includes:
when the sentry state changes from the standby state to the non-standby state, obtaining a statistical parameter in a current state switching period; and when the statistical parameter meets a preset condition, disabling an out-of-vehicle speech interaction function in the current state switching period, where the preset condition includes at least one of: a duration of the current state switching period is greater than a preset duration, or the number of times of interaction in the current state switching period is greater than a second preset number (or a second preset number of times).

Before the out-of-vehicle speech interaction function in the current state switching period is disabled, a prompt message may be output to prompt the out-of-vehicle user that the out-of-vehicle speech interaction function is to terminate. For example, a countdown "beep beep" sound is output, or a TTS broadcast "I want to step down, goodbye" is output, etc.

In some embodiments, the preset condition is that the duration of the current state switching period is greater than a preset duration. After the sentry mode is started, the sentry state enters the standby state; when it is detected that the environment where the vehicle is located appears an abnormal condition or the vehicle is subjected to abnormal collision, the sentry state enters the non-standby state, and after the abnormal condition in the environment where the vehicle is located / the abnormal collision disappears for a period of time, the sentry state recovers from the non-standby state to the standby state. When the abnormal condition in the environment where the vehicle is located / the abnormal collision exists continuously, the sentry state is always the non-standby state, the duration of each state switching period in this scenario is limited, and when the duration of a state switching period is greater than the preset duration, the out-of-vehicle speech interaction capability is forcibly interrupted.

Therefore, by limiting the duration of the single state switching period, the vehicle and the vehicle owner are prevented from being maliciously disturbed, which improves the product experience of the vehicle owner.

In some other embodiments, the preset condition is that the number of times of the interaction in the current state switching period is greater than a second preset number. When the sentry state changes from the standby state to the non-standby state, the number of times of the interaction in the current state switching period is counted, and in a case that the number of times of the interaction is greater than the second preset number, it indicates that the number of times of the interaction in one state switching period is too many, and the out-of-vehicle speech interaction capability is forcibly interrupted, thereby avoiding the vehicle and the vehicle owner from being maliciously disturbed, and improving the product experience of the vehicle owner.

In some other embodiments, it is determined that the statistical parameter meets the preset condition when meeting any one of: the duration of the current state switching period being greater than the preset duration, or the number of times of the interaction in the current state switching period being greater than the second preset number. By limiting the duration and the number of times of the interaction in the state switching period, a better anti-play effect is achieved, and the product experience of the vehicle owner is improved.

In some embodiments, the out-of-vehicle speech interaction method of the present disclosure further includes:
obtaining the number of times of out-of-vehicle speech interaction in a current engine-off period; and when the number of times of out-of-vehicle speech interaction is greater than a third reset number of times (or a third preset number of times), disabling an out-of-vehicle speech interaction function in the current engine-off period; and stopping obtaining the speech input of the out-of-vehicle user, or stopping performing the response operation according to the speech input of the out-of-vehicle user. The third preset number is greater than the first preset number, and the third preset number is greater than or equal to the second preset number.

By limiting the number of times of out-of-vehicle speech interaction in an engine-off period, short-messages and calls are avoided from disturbing a vehicle owner user, and excessive power loss caused by too many times of triggering the vehicle is avoided.

In some embodiments, the step S30 includes: identifying a user intention according to the speech input of the out-of-vehicle user; determining, when a target operation corresponding to the user intention is a communication-type operation, a target object according to the speech input of the out-of-vehicle user, where the communication-type operation includes at least one of: a short-message leaving operation, a speech call operation, or a speech message leaving operation; where the target object includes a vehicle owner terminal or a vehicle enterprise terminal; and performing the target operation corresponding to the user intention on the target object.

Specifically, after performing noise reduction on the speech input of the out-of-vehicle user, the speech identification is performed to identify a keyword representing the user intention, and a corresponding target operation is determined by matching the identified keyword with a preset operation mapping table. For example, the keywords "moving vehicle" and "leave-message" are identified from the speech input of the out-of-vehicle user, the keywords are matched with the preset operation mapping table, and the corresponding target operation is determined as the short-message leaving operation. The keyword "call" or "contacting the vehicle owner" are identified from the speech input of the out-of-vehicle user, the keyword is matched with the preset operation mapping table, and the corresponding target operation is determined as performing the speech call operation.

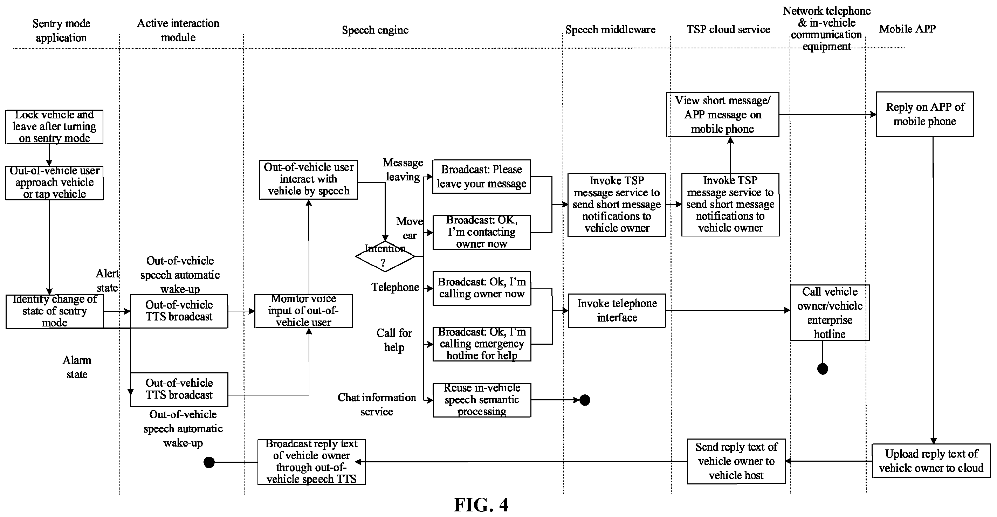

When the short-message leaving operation is performed, as shown in FIG. 4, a message service short-message interface of the TSP (telematics service provider) cloud service may be invoked to send a short-message leaving to the target object.

When the speech call operation is performed, a network speech call application built-in the vehicle machine may be invoked, to apply for a speech call to the target object, specifically including: applying for the speech call to a vehicle owner terminal, or applying for the speech call to the vehicle enterprise terminal through a vehicle enterprise hotline. As shown in FIG. 4, in an implementation, by means of the existing "E-CALL (emergency call)" capability of the vehicle, when a command word with the call for help semantic such as "call for help", "help" is identified from the speech input of the out-of-vehicle user, the command word is matched with a preset operation mapping table, to determine a corresponding target operation as a speech call operation. Based on this, a target object is determined to be a vehicle enterprise, an E-Call call capability (equivalent to clicking an "SOS" button in the vehicle) is automatically invoked, and a speech call request is initiated to the vehicle enterprise E-Call service platform. An out-of-vehicle microphone and an out-of-vehicle loudspeaker are used as basic equipment for speech call of an out-of-vehicle user to improve the speech call service for the out-of-vehicle user. By means of the existing network speech call application capability or communication service hardware equipment call capability, when it is identified that an out-of-vehicle user has a speech call requirement, a network speech call application is automatically invoked, a speech call request is automatically initiated to a vehicle user, and a channel of instant communication with the vehicle owner is provided for the out-of-vehicle user.

As shown in FIG. 4, performing a target operation on a target object may include: sending a short-message to a mobile terminal of a vehicle owner, or sending a message to a dedicated APP of the vehicle owner or the vehicle enterprise. When the vehicle owner terminal or the vehicle enterprise terminal receives the short-message message, the speech call request, and the speech leave-message, the terminal user for the vehicle owner terminal or the vehicle enterprise terminal may edit the reply text, the reply text of the terminal user is send to the vehicle machine through the cloud service, and the reply text is broadcast through the out-of-vehicle speech TTS, so that the out-of-vehicle user receives the response more timely, which avoids exacerbating the contradiction due to parking.

By performing the communication-type operation, such as a short-message leaving operation, a speech call operation, or a speech message leaving operation, a channel for communicating with a vehicle owner and a vehicle enterprise is provided for an out-of-vehicle user, which avoids exacerbating the contradiction due to the parking problem, and improves the communication efficiency and the communication effect.

In some embodiments, the step S30 includes:
identifying a user intention according to the speech input of the out-of-vehicle user; determining whether a target operation corresponding to the user intention belongs to a preset prohibition operation; in a case that the target operation corresponding to the user intention belongs to the preset prohibition operation, prohibiting performing the target operation; and in a case that the target operation corresponding to the user intention does not belong to the preset prohibition operation, performing the target operation.

The preset prohibition operations may be implemented as an operation instruction set, and whether the target operation belongs to the preset prohibition operation is determined by determining whether the target operation is an operation of the operation instruction set.

The preset prohibition operations may also be implemented as a skill field with semantic understanding, and whether a skill corresponding to the target operation belongs to the preset skill field is determined by performing the semantic understanding on the target operation, and if the skill corresponding to the target operation belongs to the preset skill field, it is determined that the target operation belongs to the preset prohibition operation.

The preset prohibition operations include, but are not limited to, operations changing a vehicle state and relating to vehicle safety and user privacy, such as vehicle control, navigation, system control, multimedia, etc., such as waking up in-vehicle speech control, opening navigation, opening music, volume adjustment, opening a window, an air conditioner, a trunk, etc., which avoids the vehicle being controlled by an illegal vehicle user, avoids a situation that the vehicle safety is endangered by opening the window, the air conditioner, the trunk, etc., by the out-of-vehicle user, meets a safety compliance requirement, and avoids product experience loss of a vehicle owner.

In a case that the target operation belongs to the preset prohibition operation, performing the target operation is prohibited, and meanwhile, a prohibited performing prompt may be output, for example, "you have no operation permission".

In a case that the target operation does not belong to the preset prohibition operation, the target operation is performed. For example, the target operation is weather query that does not belong to the preset prohibition operation, and the weather query operation is performed.

According to the embodiment of the present disclosure, the target operation corresponding to the speech input of the out-of-vehicle user is identified, the prohibition operation is preset, the speech instruction of the out-of-vehicle user is intercept-designed, and instructions such as vehicle part control or system application control are avoided from being performed in the out-of-vehicle speech interaction, so that the vehicle safety is ensured, and the product experience loss of the vehicle owner is avoided.

In some embodiments, broadcasting the speech prompt according to the preset rule in the step S10 includes:
obtaining an image of an environment where the vehicle is located; identifying, according to the image, a type of a living entity that triggers the vehicle to change from the standby state to the non-standby state, where the type of the living entity includes at least two of: a child, an animal, or an adult; and outputting a speech prompt corresponding to the type of the living entity.

When the living entity triggering the sentry mode is a child or an animal, due to the particularity of the child and the animal, a speech prompt dedicated to the child or the animal is adopted, and since the child and the animal usually do not perform speech interaction with the vehicle and have not requirement of contacting the vehicle owner, the out-of-vehicle speech interaction function may not be enabled, and the speech monitoring function is not enabled, so that unnecessary loss of the electric quantity of the vehicle is reduced.

In some embodiments, broadcasting, when the vehicle is in a sentry mode and the sentry state changes from a standby state to a non-standby state, a speech prompt according to a preset rule in step S10, specifically includes:
obtaining a speech input of the out-of-vehicle user, and collecting an image of the out-of-vehicle user; identifying the type of the living entity triggering the sentry mode according to the speech input and the image of the out-of-vehicle user; and when the type of the living entity is a child or an animal, outputting a speech prompt corresponding to the child or the animal. When the speech prompt corresponding to the child or animal is output, the step S20 and subsequent steps may not be performed.

In an implementation scenario, as shown in FIG. 4, the out-of-vehicle speech interaction method of the present disclosure includes following steps.

The vehicle owner locks the vehicle and leaves after turning on the sentry mode, and the sentry mode is in the standby state.

An out-of-vehicle user approaches the vehicle or taps the vehicle, the sentry mode is switched from the standby state to the non-standby state (an alert state or an alarm state), the sentry mode application sends sentry mode state switching information to an active interaction module, the active interaction module wakes up the out-of-vehicle TTS for speech prompt broadcast, and then obtains the speech input of the out-of-vehicle user (the active interaction module obtains the speech input of the out-of-vehicle user through a speech engine).

The out-of-vehicle user carries out speech interaction with the vehicle. In the process, the vehicle speech engine identifies the user intention; when the user intention is the leave-message, "Please leave your message" is broadcast through the out-of-vehicle TTS; when the user intention is moving the vehicle, "OK, I'm contacting the owner now" is broadcast through the out-of-vehicle TTS; when the user intention is calling, "Ok, I'm calling the owner now" is broadcast through the out-of-vehicle TTS; when the user intention is calling for help, "Ok, I'm calling the emergency hotline for help" is broadcast through the out-of-vehicle TTS; and when the user intention is the chat or information service and the like, in-vehicle speech semantic processing is reused.

When the user intention is the leave-message or moving the vehicle, the TSP message service is invoked to send a short-message notification to the vehicle owner, and the vehicle owner checks the short-message of the mobile phone or uses the APP of the mobile phone to check the message. The vehicle owner also may reply on the APP of the mobile phone, so that the reply text of the vehicle owner is uploaded to the cloud, then the reply text of the vehicle owner is sent to the vehicle host, and the reply text of the vehicle owner is broadcast through the out-of-vehicle speech TTS.

When the user intention is calling or calling for help, the telephone interface is invoked to make a call to the vehicle owner or the vehicle enterprise hotline telephone.

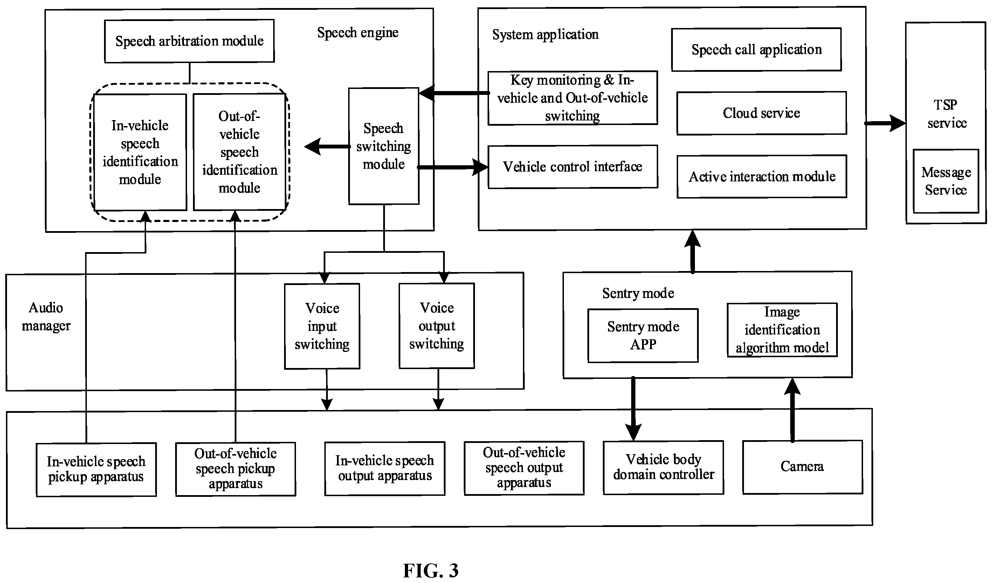

In some embodiments, FIG. 3 shows a system architecture diagram for implementing the above out-of-vehicle speech interaction method, and the system includes: an active interaction module, a sentry module, an out-of-vehicle speech pickup apparatus, and an out-of-vehicle speech output apparatus.

The sentry module is configured to adjust the sentry state according to the environment of the vehicle, and send a sentry state change condition to the active interaction module. In an embodiment, the sentry module may perform setting of the sentry mode to provide a sentry application for the vehicle owner to turn on or off the sentry mode. The sentry module may be connected to the camera to obtain an image collected by the camera, identify the image through an image identification algorithm model, and perform sentry state switching based on an image identification result. The sentry module may be further connected to a vibration sensor, to receive a vibration signal sent by the vibration sensor, and perform the sentry state switching based on the vibration signal.

The active interaction module is configured to receive the sentry state change condition sent by the sentry module, and when the sentry state changes from the standby state to the non-standby state, broadcast a speech prompt through an out-of-vehicle speech output apparatus according to a preset rule. Optionally, before the output apparatus broadcasts the speech prompt, the active interaction module further: determines whether an out-of-vehicle speech available precondition is met; in a case that the out-of-vehicle speech available precondition is not met, does not broadcast the speech prompt, where the precondition may include: the out-of-vehicle speech main switch is turned on, the vehicle is in the parking, the main driving seat has no person, the central control lock is locked, and the key of the vehicle is located outside the vehicle.

The out-of-vehicle speech pickup apparatus is configured to pick up an out-of-vehicle user speech, and send the out-of-vehicle user speech to the active interaction module. The out-of-vehicle speech pickup apparatus may be an out-of-vehicle microphone.

The active interaction module is further configured to obtain the speech input of an out-of-vehicle user, and perform a response operation according to the speech input of the out-of-vehicle user.

The specific explanation of the steps performed by the active interaction module is described above, which will be repeated herein.

In an embodiment, in the sentry module, the image identification algorithm module monitors the video stream around the vehicle through the panoramic camera, identifies that the living entity approaches the vehicle, sends the identification result to the sentry mode application; after the sentry mode application receives the signal that there is a living entity approaching the vehicle, the sentry mode application triggers the alert state and starts the video recording function, and transmits an alert state triggered signal to the active interaction module in the monitoring state; and then the active interaction module controls the broadcast speech and wakes up the speech conversation state, obtains the speech input of the out-of-vehicle user, and performs the response operation according to the speech input of the out-of-vehicle user.

Through the perception of the working condition and operation state of the whole vehicle by the active interaction module, the product power such as existing sentry mode products, out-of-vehicle speech interaction products and the like is integrated, and different out-of-vehicle speech interaction product services are provided for the vehicle owner.

In some embodiments, as shown in FIG. 3, the out-of-vehicle speech interaction system further includes a speech engine, an in-vehicle speech pickup apparatus, and an in-vehicle speech output apparatus. The speech engine includes a speech switching module, a speech arbitration module, an in-vehicle speech identification module, and an out-of-vehicle speech identification module. The in-vehicle speech pickup apparatus is connected to the in-vehicle speech identification module, the out-of-vehicle speech pickup apparatus is connected to the out-of-vehicle speech identification module, and both the in-vehicle speech identification module and the out-of-vehicle speech identification module are connected to the speech arbitration module. The speech switching module is connected to the out-of-vehicle speech pickup apparatus and the out-of-vehicle speech output apparatus, the in-vehicle speech pickup apparatus and the in-vehicle speech output apparatus, and the in-vehicle speech identification module and the out-of-vehicle speech identification module, and is configured to control switching between the out-of-vehicle speech pickup apparatus and the in-vehicle speech pickup apparatus, switching between the out-of-vehicle speech output apparatus and the in-vehicle speech output apparatus, and switching between the in-vehicle speech identification module and the out-of-vehicle speech identification module.

After receiving the in-vehicle speech switching instruction sent by the active interaction engine, the speech switching module performs the switching between the out-of-vehicle speech pickup apparatus and the in-vehicle speech pickup apparatus, the switching between the out-of-vehicle speech output apparatus and the in-vehicle speech output apparatus, and the switching between the in-vehicle speech identification module and the out-of-vehicle speech identification module.

The speech arbitration module is a speech product basic capability module and includes a semantic understanding algorithm model which is used for understanding semantics of speech input of a user, and both the in-vehicle speech identification module and the out-of-vehicle speech identification module are connected to the speech arbitration module, so that when partial functions of out-of-vehicle speech interaction are achieved, the in-vehicle speech capability may be reused, and the development difficulty and development cost may be reduced. In an implementation, when the intention operation of the out-of-vehicle user is identified as the speech chat operation or the information service operation according to the speech input of the out-of-vehicle user, the in-vehicle speech capability is reused, and the out-of-vehicle speech interaction and the in-vehicle speech interaction semantic understanding algorithm model are shared, so that the out-of-vehicle speech interaction capability is richer and more interesting on basis of the safety compliance.

The specific explanation of the steps performed by the active interaction module is described above, which will be repeated herein.

According to the embodiment of the present disclosure, an active interaction module product is used as a hub, and through the perception of the working condition and operation state of the whole vehicle by the active interaction module, the product power such as existing sentry mode products, out-of-vehicle speech interaction products, vehicle machine system network telephone products, Internet of Vehicles products, and the like is integrated, and different out-of-vehicle speech interaction product services are provided for the vehicle owner.

In some embodiments, the out-of-vehicle speech interaction apparatus of the present disclosure includes a computer-readable storage medium storing a computer program and a processor, where the computer program, when being read and run by the processor, implements the above out-of-vehicle speech interaction method. The out-of-vehicle speech interaction apparatus may be implemented as a vehicle body domain controller. Compared with the existing technology, the out-of-vehicle speech interaction apparatus of the embodiment of the present disclosure has the beneficial effects substantially same as those of the above out-of-vehicle speech interaction method, which will be not repeated herein.

In some embodiments, the vehicle of the present disclosure includes the above out-of-vehicle speech interaction apparatus. Compared with the existing technology, the vehicle of the embodiment of the present disclosure has the beneficial effects substantially same as those of the above out-of-vehicle speech interaction method, which will be not repeated herein.

It could be understood by those with ordinary skills in the art that the implementation of all or a part of the processes of the method in the above embodiment can be accomplished by a computer program instructing related hardware, and the program can be stored in a computer-readable storage medium. When the program is executed, the process of the embodiment of each method described above can be implemented. The storage medium may be a magnetic disk, an optical disk, a Read-Only Memory (ROM), or Random Access Memory (RAM) and the like. In the embodiments of the present disclosure, the units explained as separate components may be or may not be physically separated, and the components displayed as units may be or may not be physical units, that is, they may be located in one place or may be distributed across multiple network units. A part or all of units may be selected according to actual needs to achieve the purpose of the solutions in these embodiments of the present disclosure. In addition, each functional unit in multiple embodiments of the present disclosure can be integrated into one processing unit, multiple units can exist separately physically, or two or more units can be integrated into one unit. The above integrated unit can be implemented in the form of hardware or in the form of a software function unit.

An embodiment of the present disclosure further provides a computer-readable storage medium, storing a computer program. The program, when executed by a processor, implements the out-of-vehicle speech interaction method described in any one of the above embodiments.

Although the embodiments of the present disclosure disclose the above content, the protection scope of the embodiments of the present disclosure is not limited thereto. Those skilled in the art may make various changes and modifications without departing from the spirit and scope of the embodiments of the present disclosure, and these changes and modifications all fall in the protection scope of the embodiments of the present disclosure.

## Claims

1. An out-of-vehicle speech interaction method, comprising:
broadcasting, when a vehicle is in a sentry mode and changes from a standby state to a non-standby state, a speech prompt according to a preset rule;
obtaining a speech input of an out-of-vehicle user; and
performing a response operation according to the speech input of the out-of-vehicle user.

2. The out-of-vehicle speech interaction method of claim 1, wherein performing the response operation according to the speech input of the out-of-vehicle user, comprises:
identifying a user intention according to the speech input of the out-of-vehicle user;
obtaining, when a target operation corresponding to the user intention is a communication-type operation, a number of times of performing the target operation in a preset period, wherein the communication-type operation comprises at least one of: a short-message leaving operation, a speech call operation, or a speech message leaving operation; wherein the preset period comprises a current state switching period or a current engine-off period; wherein the current state switching period indicates a period in which the vehicle changes from the standby state to the non-standby state and recovers to the standby state;
determining whether the number of times of performing the target operation in the preset period is less than a first preset number;
performing, in a case that the number of times of performing the target operation in the preset period is less than the first preset number, the target operation; and
outputting, in a case that the number of times of performing the target operation in the preset period is not less than the first preset number, a refusal-to-perform prompt.

3. The out-of-vehicle speech interaction method of claim 1 or 2, further comprising:
obtaining, when the sentry state changes from the standby state to the non-standby state, a statistical parameter in a current state switching period, wherein the current state switching period indicates a period in which the vehicle changes from the standby state to the non-standby state and recovers to the standby state; and
disabling, when the statistical parameter meets a preset condition, an out-of-vehicle speech interaction function in the current state switching period, wherein the preset condition comprises at least one of: a duration of the current state switching period is greater than a preset duration, or a number of times of interaction in the current state switching period is greater than a second preset number.

4. The out-of-vehicle speech interaction method of claim 1 or 2, further comprising:
obtaining a number of times of out-of-vehicle speech interaction in a current engine-off period; and
disabling, when the number of times of out-of-vehicle speech interaction is greater than a third preset number, an out-of-vehicle speech interaction function in the current engine-off period.

5. The out-of-vehicle speech interaction method of claim 1 or 2, wherein broadcasting the speech prompt according to the preset rule, comprises:
extracting the speech prompt from a preset speech prompt set for broadcasting, wherein the non-standby state comprises an alert state and an alarm state, wherein the preset speech prompt set is a speech prompt set corresponding to a current state of the vehicle, a speech prompt set corresponding to instructions pre-stored by a vehicle owner, or a speech prompt set corresponding to a current scenario in which the vehicle is located.

6. The out-of-vehicle speech interaction method of claim 1 or 2, wherein performing the response operation according to the speech input of the out-of-vehicle user, comprises:
identifying a user intention according to the speech input of the out-of-vehicle user;
determining, when a target operation corresponding to the user intention is a communication-type operation, a target object according to the speech input of the out-of-vehicle user, wherein the communication-type operation comprises at least one of: a short-message leaving operation, a speech call operation, or a speech message leaving operation; wherein the target object comprises a vehicle owner terminal or a vehicle enterprise terminal; and
performing the target operation corresponding to the user intention on the target object.

7. The out-of-vehicle speech interaction method of claim 1 or 2, wherein performing the response operation according to the speech input of the out-of-vehicle user, comprises:
identifying a user intention according to the speech input of the out-of-vehicle user;
determining whether a target operation corresponding to the user intention belongs to a preset prohibition operation;
prohibiting, in a case that the target operation corresponding to the user intention belongs to the preset prohibition operation, performing the target operation; and
performing, in a case that the target operation corresponding to the user intention does not belong to the preset prohibition operation, the target operation.

8. The out-of-vehicle speech interaction method of claim 1 or 2, wherein broadcasting the speech prompt according to the preset rule, comprises:
obtaining an image of an environment where the vehicle is located;
identifying, according to the image, a type of a living entity that triggers the vehicle to change from the standby state to the non-standby state, wherein the type of the living entity comprises at least two of: a child, an animal, or an adult; and
outputting a speech prompt corresponding to the type of the living entity.

9. An out-of-vehicle speech interaction apparatus, comprising: a computer-readable storage medium storing a computer program; and one or more processors, wherein when the computer program is read and run by the one or more processors, the out-of-vehicle speech interaction method of any one of claims 1 to 8 is implemented.

10. A vehicle, comprising the out-of-vehicle speech interaction apparatus of claim 9.
